# EUROPÄISCHE PATENTSCHRIFT

(11) **EP 1 215 163 B1**
(45) Veröffentlichungstag und Bekanntmachung des Hinweises auf die Patenterteilung: **31.08.2005**
(21) Anmeldenummer: 01129863.5
(22) Anmeldetag: 14.12.2001
(51) Int. Cl.: B66F 9/075, B60K 15/03, B60K 15/10, B60K 1/04

(54) **Flurförderzeug mit einem Wasserstoffspeicher**
Industrial truck with a hydrogen tank
Chariot de manutention avec un réservoir de stockage d' hydrogène

(30) Priorität: 18.12.2000 DE 10063174
(43) Veröffentlichungstag der Anmeldung: 19.06.2002
(73) Patentinhaber: STILL GMBH, D-22113 Hamburg (DE)
(72) Erfinder: Pfeiffer, Norbert, Dipl.-Wirtsch.-Ing., 22393 Hamburg (DE); Fromme, Georg, Dr.-Ing., 22145 Hamburg (DE); Leifert, Torsten, Dr.-Ing., 21360 Vögelsen (DE)
(74) Vertreter: Lang, Michael

(56) Entgegenhaltungen:
- EP-A- 0 889 001
- EP-A- 1 063 152
- EP-A- 1 090 874
- WO-A-01/79012
- FR-A- 1 362 170
- US-A- 5 067 447

## Beschreibung

Die Erfindung betrifft ein Flurförderzeug, insbesondere Gabelstapler, mit einer Lastaufnahmevorrichtung und einem entgegengesetzt zu der Lastaufnahmevorrichtung angeordneten Gegengewicht, einer mit Wasserstoff betreibbaren Antriebsanordnung und einem Speicher für Wasserstoff.

Flurförderzeuge der genannten Art weisen eine Lastaufnahmevorrichtung zum Handhaben von Lasten auf, die in der Regel ein an einem Hubgerüst anhebbare Lastgabel umfasst. Wenn sich, wie beispielsweise bei Gabelstaplern, die Lastgabel und damit der Schwerpunkt einer aufgenommenen Last außerhalb der Radbasis des Flurförderzeugs befinden, ist zum Ausgleich der Gewichtskraft der Last ein Gegengewicht erforderlich. Das Gegengewicht ist dabei an dem der Lastaufnahmevorrichtung entgegengesetzten Ende des Flurförderzeugs angeordnet, bei Gabelstaplern wird das Fahrzeugheck von dem Gegengewicht gebildet. Üblicherweise ist das Gegengewicht aus Gussstahl hergestellt und bildet Teil der tragenden Struktur des Flurförderzeugs.

Flurförderzeug mit herkömmlicher Antriebstechnik weisen als Energiespeicher eine elektrische Speicherbatterie, einen Tank für Dieselkraftstoff oder einen Speicherbehälter für Flüssiggas auf. Als alternative Antriebstechnik für Flurförderzeuge werden derzeit verschiedene Arten von Wasserstoffantrieben untersucht. Hierbei besteht die Möglichkeit, den Wasserstoff im Flurförderzeug durch einen Reformationsprozess, beispielsweise aus Methanol zu erzeugen. Alternativ hierzu kann in dem Flurförderzeug einen Speicher für Wasserstoff vorgesehen sein, dem der Wasserstoff in einem Betankungsvorgang von außen in flüssiger oder gasförmiger Form zugeführt wird.

Aus der US 5,067,447 ist es bekannt, einen zylindrischen Wasserstoffspeicher, insbesondere einen Metallhydrid-Tank, auf dem Gegengewicht eines Gabelstaplers anzuordnen. Die dort gezeigte Anordnung entspricht der eines Treibgastanks bei einem herkömmlichen verbrennungsmotorischen Stapler. Der Wärmehaushalt des Wasserstoffspeichers wird durch die Zirkulation eines fluiden Mediums reguliert. Der dazu benötigte Heiz- beziehungsweise Kühlkreislauf ist aufwendig zu fertigen und anfällig für Reparaturen.

Der Erfindung liegt die Aufgabe zugrunde, ein Flurförderzeug mit einem vorteilhaft angeordneten Speicher mit einfach regulierbarem Wärmehaushalt zur Verfügung zu stellen.

Diese Aufgabe wird erfindungsgemäß dadurch gelöst, dass der Speicher derart mit dem Gegengewicht verbunden ist, dass ein Wärmeübergang zwischen dem Gegengewicht und dem Speicher ermöglicht ist.

Durch die Erfindung können die hohe Wärmeleitfähigkeit und die große Wärmekapazität des Gegengewichts ausgenutzt werden. Bei dem Betanken mit Wasserstoff gibt ein Metallhydridspeicher Wärme ab. Diese Wärme kann auf das Gegengewicht übertragen werden, das sich dabei erwärmt. Zur Entnahme von Wasserstoff aus dem Metallhydridspeicher wird hingegen Wärme benötigt, die dann aus dem Gegengewicht abgeführt werden kann. Da der Speicher mit dem Gegengewicht verbunden ist, ist der Speicher im Flurförderzeug ebenfalls entgegengesetzt zu der Lastaufnahmevorrichtung angeordnet, wodurch die Gewichtskraft des Speichers ebenfalls als Gegenkraft zu dem Gewicht einer angehobenen Last wirkt.

Vorzugsweise ist der Speicher vollständig im Bereich des Gegengewichts angeordnet. Es kann hierdurch jeder Teil des Speichers zur Kompensation der Gewichtskraft einer angehobenen Last ausgenutzt werden.

Die zur Herstellung des Gegengewichts erforderliche Materialmenge kann reduziert werden, wenn die zur Kompensation der auf die Lastaufnahmevorrichtung wirkenden Kräfte erforderliche Gegenkraft gemeinsam von der Masse des Gegengewichts und der Masse des Speichers erzeugt wird. Die Masse des Speichers wird dabei bei der Festlegung der Masse des Gegengewichts von vornherein berücksichtigt.

Eine große Masse des Speichers liegt insbesondere dann vor, wenn der Speicher als Metallhydridspeicher ausgebildet ist. Metallhydridspeicher ermöglichen die Speicherung von Wasserstoff bei Umgebungstemperatur und sind beispielsweise aus automobilen Wasserstoff-Versuchsfahrzeugen bekannt, werden dort jedoch aufgrund ihres hohen Gewichts kaum eingesetzt. Typische Daten für Metallhydridspeicher sind beispielsweise ein Gewicht von 300 kg bei 2 kg Wasserstoff-Speicherkapazität und 160 Litern Bauraumvolumen.

Eine optimale Raumausnutzung innerhalb des Flurförderzeugs kann erreicht werden, wenn der Speicher mehrteilig ausgebildet ist. Es können somit mehrere kleine Speicher anstelle eines großen Speichers eingesetzt werden. Der Speicher kann im Normalfall über die gesamte Lebensdauer des Flurförderzeugs hinweg in dem Flurförderzeug verbleiben, so dass keine besonderen Anforderungen hinsichtlich Zugänglichkeit und Austauschbarkeit des Speichers bestehen.

Gemäß einer zweckmäßigen Ausgestaltungsform ist zumindest ein Teil des Speichers oberhalb des Gegengewichts angeordnet.

Ebenso zweckmäßig ist es, wenn zumindest ein Teil des Speichers im Bereich der Oberseite des Gegengewichts, beispielsweise in einer Ausnehmung des Gegengewichts angeordnet ist.

Zusätzlich kann zur Wärmeabfuhr aus dem Speicher eine Belüftungsvorrichtung vorgesehen sein. Die Belüftungsvorrichtung ermöglicht eine Luftkühlung des Speichers, insbesondere während des Befüllens mit Wasserstoff.

Zweckmäßig ist es hierbei, wenn der Zuluftstrom und/oder der Abluftstrom der Belüftungsvorrichtung durch eine Ausnehmung des Gegengewichts geleitet wird. Es kann dabei sichergestellt werden, dass alle Teile des Speichers, die im Bereich des Heckgewichts angeordnet sind, von dem Luftstrom umströmt werden.

Bevorzugt weist die Antriebsanordnung mindestens eine Brennstoffzelle auf. In der Brennstoffzelle wird in bekannter Weise aus dem aus dem Speicher entnommenen Wasserstoff und aus Umgebungssauerstoff elektrische Energie erzeugt, mit dem die Aggregate des Flurförderzeugs, also insbesondere ein Fahrantrieb und ein Hubantrieb mit elektrischer Energie versorgt werden.

Gemäß einer alternativen Anordnung ist es möglich, dass die Antriebsanordnung mindestens einen Verbrennungsmotor aufweist. Der aus dem Speicher entnommene Wasserstoff kann dabei in einem Verbrennungsmotor verbrannt werden, der dann über ein geeignetes Getriebe den Fahrantrieb sowie eine Hydraulikpumpe für den Hubantrieb antreibt.

Weitere Vorteile und Einzelheiten der Erfindung werden anhand eines in den schematischen Figuren dargestellten Ausführungsbeispiels näher erläutert. Dabei zeigt
- Figur 1: ein erfindungsgemäßes Flurförderzeug in Seitenansicht,
- Figur 2: das erfindungsgemäße Flurförderzeug in Draufsicht.

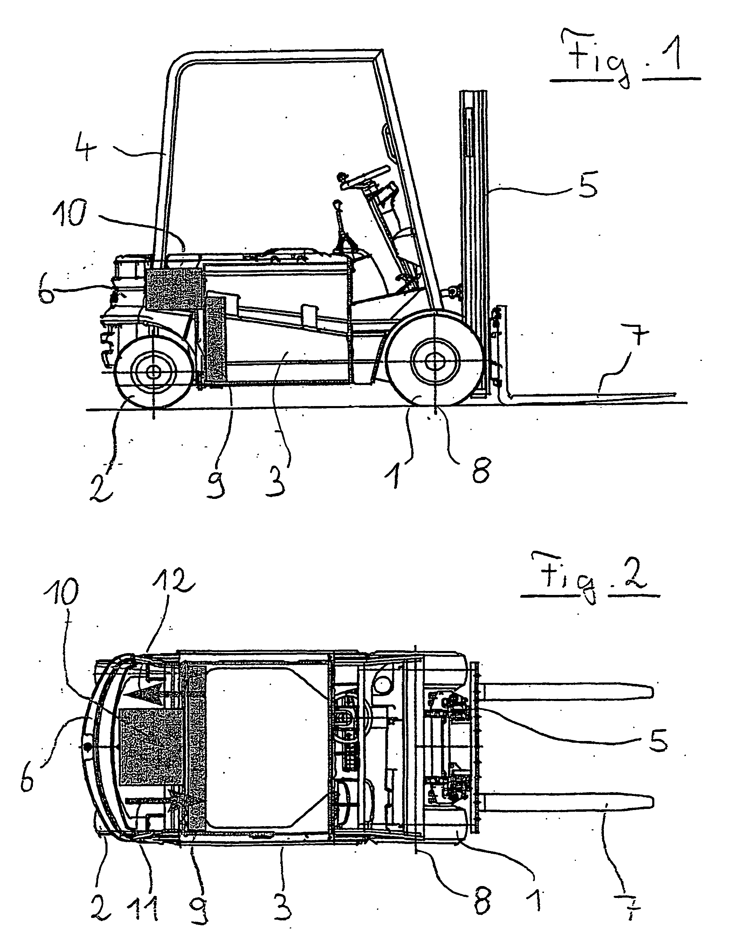

Figur 1 zeigt die Seitenansicht eines als Gabelstapler ausgeführten erfindungsgemäßen Flurförderzeugs. Der Gabelstapler steht mit zwei Vorderrädern 1 und zwei Hinterrädern 2 auf einer Fahrbahn auf. Zwischen den Vorderrädern 1 und den Hinterrädern 2 ist ein Fahrzeugrahmen 3 angeordnet, an dem direkt oder indirekt verschiedene Aggregate des Gabelstaplers, eine Fahrerkabine 4, ein Hubgerüst 5 sowie ein Gegengewicht 6 befestigt sind. An dem nach oben ausfahrbaren Hubgerüst 5 ist eine als Lastgabel ausgeführte Lastaufnahmevorrichtung 7 auf- und abbewegbar befestigt.

Bei dem dargestellten gattungsgemäßen Flurförderzeug befindet sich die Lastgabel und damit auch der Schwerpunkt einer gegebenenfalls aufgenommenen Last außerhalb der Radbasis. Die Schwerkraft der aufgenommenen Last erzeugt deshalb ein um die Aufstandslinie 8 der Vorderräder 1 im Uhrzeigersinn wirkendes Drehmoment. Diesem Drehmoment wird durch die Gewichtskraft des Gegengewichts 6 entgegengewirkt, das am hinteren Ende des Gabelstaplers, entgegengesetzt zu der Lastaufnahmevorrichtung angeordnet ist.

Der Gabelstapler weist eine mit Wasserstoff (H₂) betreibbare Antriebsvorrichtung auf, die im Bereich des Fahrzeugrahmens 3 angeordnet ist. Ein im vorliegenden Fall als Metallhydridspeicher ausgeführter Speicher 9, 10 für Wasserstoff ist erfindungsgemäß im Bereich des Gegengewichts 6 angeordnet. Der Speicher 9, 10 ist im gezeigten Ausführungsbeispiel zweiteilig ausgeführt. Ein erster Teil 9 des Speichers erstreckt sich in Querrichtung des Gabelstaplers und ist mit geringfügigem Abstand vor dem Gegengewicht 6 angeordnet. Ein zweiter Teil 10 des Speichers befindet sich im oberen Teil des Gegengewichts 6 in einer bei der Herstellung des Gegengewichts 6 erzeugten Ausnehmung.

Mit der Anordnung des Speichers 9, 10 in unmittelbarer Näher des Gegengewichts 6 am hinteren Ende des Gabelstaplers kann die Gewichtskraft des Speichers 9, 10 ausgenutzt werden, um dem von einer angehobenen Last erzeugten Drehmoment entgegenzuwirken. Bei entsprechender Auslegung des Gegengewichts kann dessen Masse gegenüber einem Gabelstapler ohne Wasserstoffspeicher reduziert werden. Die Anordnung des Speichers 9, 10 im Inneren des Fahrzeugrahmens 3 und innerhalb der äußeren Konturen des Gegengewichts 6 schützt den Speicher 9, 10 vor äußeren Einflüssen und Beschädigungen, z.B. infolge eines Unfalls.

Figur 2 zeigt das erfindungsgemäße Flurförderzeug in Draufsicht. Zu erkennen ist insbesondere die Anordnung der beiden Teile des Speichers 9, 10 für Wasserstoff. Die bei einem Betanken des als Metallhydridspeichers ausgeführten Speichers 9, 10 frei werdende Wärme kann zumindest teilweise von dem Gegengewicht 6 aufgenommen werden, das sich hierbei aufgrund seiner großen Masse nur mäßig erwärmt. Falls eine zusätzliche Kühlung des Speichers 9, 10 erforderlich ist, kann dies über eine Zwangsbelüftung erreicht werden, bei der vorzugsweise die gesamte Oberfläche 9, 10 des Speichers umströmt wird. Die Führung der Kühlluft kann dabei durch in das Gegengewicht 6 eingearbeitete Kanäle erfolgen. Die Richtung des Kühlluftstroms ist in der Figur 2 mit Pfeilen 11, 12 verdeutlicht. Wenn im Bereich des Gegengewichts 6 weitere wärmeerzeugende Bauteile, z.B. eine elektrische Steuereinheit angeordnet sind, kann die Wärmekapazität des Gegengewichts 6 und ein gegebenenfalls vorhandener Kühlluftstrom ebenfalls zur Kühlung dieses weiteren Bauteils verwendet werden.

## Patentansprüche

1. Flurförderzeug, insbesondere Gabelstapler, mit einer Lastaufnahmevorrichtung (7) und einem entgegengesetzt zu der Lastaufnahmevorrichtung (7) angeordneten Gegengewicht (6), einer mit Wasserstoff betreibbaren Antriebsanordnung und einem Speicher (9, 10) für Wasserstoff, wobei der Speicher (9, 10) zumindest teilweise im Bereich des Gegengewichts (6) angeordnet ist, **dadurch gekennzeichnet, dass** der Speicher (9, 10) derart mit dem Gegengewicht (6) verbunden ist, dass ein Wärmeübergang zwischen dem Gegengewicht (6) und dem Speicher (9, 10) ermöglicht ist.

2. Flurförderzeug nach Anspruch 1, **dadurch gekennzeichnet, dass** der Speicher (9, 10) vollständig im Bereich des Gegengewichts (6) angeordnet ist.

3. Flurförderzeug nach Anspruch 1 oder 2, **dadurch gekennzeichnet, dass** die zur Kompensation der auf die Lastaufnahmevorrichtung (7) wirkenden Kräfte erforderliche Gegenkraft gemeinsam von der Masse des Gegengewichts (6) und der Masse des Speichers (9, 10) erzeugt wird.

4. Flurförderzeug nach einem der Ansprüche 1 bis 3, **dadurch gekennzeichnet, dass** der Speicher (9, 10) als Metallhydridspeicher ausgebildet ist.

5. Flurförderzeug nach einem der Ansprüche 1 bis 4, **dadurch gekennzeichnet, dass** der Speicher (9, 10) mehrteilig ausgebildet ist.

6. Flurförderzeug nach einem der Ansprüche 1 bis 5, **dadurch gekennzeichnet, dass** zumindest ein Teil des Speichers (10) im Bereich der Oberseite des Gegengewichts (6), beispielsweise in einer Ausnehmung des Gegengewichts angeordnet ist.

7. Flurförderzeug nach einem der Ansprüche 1 bis 6, **dadurch gekennzeichnet, dass** zumindest ein Teil des Speichers (9) vor dem Gegengewicht (6) angeordnet ist.

8. Flurförderzeug nach einem der Ansprüche 1 bis 7, **dadurch gekennzeichnet, dass** zur Wärmeabfuhr aus dem Speicher (9, 10) eine Belüftungsvorrichtung vorgesehen ist.

9. Flurförderzeug nach Anspruch 8, **dadurch gekennzeichnet, dass** der Zuluftstrom und/oder der Abluftstrom der Belüftungsvorrichtung durch eine Ausnehmung des Gegengewichts (6) geleitet wird.

10. Flurförderzeug nach einem der Ansprüche 1 bis 9, **dadurch gekennzeichnet, dass** die Antriebsanordnung mindestens eine Brennstoffzelle aufweist.

11. Flurförderzeug nach einem der Ansprüche 1 bis 10, **dadurch gekennzeichnet, dass** die Antriebsanordnung mindestens einen Verbrennungsmotor aufweist.

## Claims

1. Industrial truck, in particular a fork-lift truck, having a load-receiving device (7) and a counterweight (6), which is arranged opposite the load-receiving device (7), a drive arrangement, which can be operated using hydrogen, and a tank (9, 10) for hydrogen, the tank (9, 10) being arranged at least partially in the region of the counterweight (6), **characterized in that** the tank (9, 10) is connected to the counterweight (6) such that heat transfer is made possible between the counterweight (6) and the tank (9, 10).

2. Industrial truck according to Claim 1, **characterized in that** the tank (9, 10) is arranged completely in the region of the counterweight (6).

3. Industrial truck according to Claim 1 or 2, **characterized in that** the opposing force, which is required for the purpose of compensating for the forces acting on the load-receiving device (7), is produced jointly by the mass of the counterweight (6) and the mass of the tank (9, 10).

4. Industrial truck according to any of Claims 1 to 3, **characterized in that** the tank (9, 10) is in the form of a metal hydride tank.

5. Industrial truck according to any of Claims 1 to 4, **characterized in that** the tank (9, 10) is of multi-part design.

6. Industrial truck according to any of Claims 1 to 5, **characterized in that** at least part of the tank (10) is arranged in the region of the upper side of the counterweight (6), for example in a recess in the counterweight.

7. Industrial truck according to any of Claims 1 to 6, **characterized in that** at least part of the tank (9) is arranged in front of the counterweight (6).

8. Industrial truck according to any of Claims 1 to 7, **characterized in that** a ventilation device is provided for the purpose of removing heat from the tank (9, 10).

9. Industrial truck according to Claim 8, **characterized in that** the inlet air current and/or the outlet air current of the ventilation device is passed through a recess in the counterweight (6).

10. Industrial truck according to any of Claims 1 to 9, **characterized in that** the drive arrangement has at least one fuel cell.

11. Industrial truck according to any of Claims 1 to 10, **characterized in that** the drive arrangement has at least one internal combustion engine.

## Revendications

1. Chariot de manutention, en particulier élévateur à fourche, qui présente un dispositif (7) de reprise des charges et un contrepoids (6) disposé en opposition par rapport au dispositif (7) de reprise des charges, un système d'entraînement alimenté en hydrogène et un réservoir (9, 10) d'hydrogène, le réservoir (9, 10) étant disposé au moins en partie dans la zone du contrepoids (6), **caractérisé en ce que** le réservoir (9, 10) est relié au contrepoids (6) de manière à permettre un transfert de chaleur entre le contrepoids (6) et le réservoir (9, 10).

2. Chariot de manutention selon la revendication 1, **caractérisé en ce que** le réservoir (9, 10) est disposé entièrement dans la zone du contrepoids (6).

3. Chariot de manutention selon les revendications 1 ou 2, **caractérisé en ce que** la contre-force nécessaire pour compenser les forces qui agissent sur le dispositif (7) de reprise des charges est créée à la fois par la masse du contrepoids (6) et par la masse du réservoir (9, 10).

4. Chariot de manutention selon l'une des revendications 1 à 3, **caractérisé en ce que** le réservoir (9, 10) est configuré comme réservoir à hydrure métallique.

5. Chariot de manutention selon l'une des revendications 1 à 4, **caractérisé en ce que** le réservoir (9, 10) est réalisé en plusieurs pièces.

6. Chariot de manutention selon l'une des revendications 1 à 5, **caractérisé en ce qu'**au moins une partie du réservoir (10) est disposée dans la zone du côté supérieur du contrepoids (6), par exemple dans une découpe du contrepoids.

7. Chariot de manutention selon l'une des revendications 1 à 6, **caractérisé en ce qu'**au moins une partie du réservoir (9) est disposée en avant du contrepoids (6).

8. Chariot de manutention selon l'une des revendications 1 à 7, **caractérisé en ce qu'**un dispositif de ventilation est prévu pour évacuer la chaleur du réservoir (9, 10).

9. Chariot de manutention selon la revendication 8, **caractérisé en ce que** l'écoulement d'air d'amenée et/ou l'écoulement d'air de sortie du dispositif de ventilation sont guidés dans une découpe du contrepoids (6).

10. Chariot de manutention selon l'une des revendications 1 à 9, **caractérisé en ce que** le système d'entraînement présente au moins une pile à combustible.

11. Chariot de manutention selon l'une des revendications 1 à 10, **caractérisé en ce que** le système d'entraînement présente au moins un moteur à combustion interne.
